# EUROPEAN PATENT APPLICATION

(11) **EP 1 005 895 A1**
(43) Date of publication of application: **07.06.2000**
(21) Application number: 99123287.7
(22) Date of filing: 30.11.1999
(51) Int. Cl.: B01D 53/86, B01D 53/04

(54) **Purification of gases**

(30) Priority: 04.12.1998 US 205046
(71) Applicant: AIR PRODUCTS AND CHEMICALS, INC., Allentown, PA 18195-1501 (US)
(72) Inventor: Schwarz, Alexander, Bethlehem, PA 18105 (US); Hsiung, Thomas Hsiao-Ling, Emmaus, PA 18049 (US); Golden, Timothy Christopher, Allentown, PA 18104 (US); Schaub, Elizabeth Susan, Emmaus, PA 18049-1272 (US)
(74) Representative: Schwabe - Sandmair - Marx

(57) **Abstract**

Carbon monoxide and optionally hydrogen are removed for a gas stream by oxidation and adsorption. The gas stream is contacted with a physical mixture of a solid oxidation catalyst, such as palladium on an alumina support, and a carbon dioxide adsorbent such as 13X zeolite. Hydrogen may be oxidised to water by the same or a different catalyst and may be adsorbed on the catalyst.

## Description

### CROSS-REFERENCE TO RELATED APPLICATIONS

Not applicable.

### STATEMENT REGARDING FEDERALLY SPONSORED RESEARCH OR DEVELOPMENT

Not applicable.

### BACKGROUND OF THE INVENTION

The present invention relates to the removal of carbon monoxide and optionally hydrogen from a gas stream such as air or nitrogen for the production of a purified gas stream, which may be high purity nitrogen gas.

In many chemical processes, CO and H₂ are undesired species because of their chemical reactivity. For example, the electronics industry requires high purity N₂ (less than 5 parts per billion by vol. of CO and H₂) for the production of semiconductor materials. Impurities present in the N₂ during formation of the silicon wafers greatly increase chip failure rates. When air is subjected to cryogenic separation to produce N₂, since N₂ and CO have similar boiling points, CO present in the feed air to the cryogenic column is substantially unaffected by the distillation process. If no special provisions are taken to the distillation process, hydrogen enriches in the product N₂ to approximately two and half times its concentration in the feed air. Therefore, the production of high purity N₂ requires either 1) removal of CO and H₂ from ambient air prior to the distillation column or 2) post-treatment of the product N₂. Often times, electronics customers require both pre- and post-treatment for added system reliability.

The current techniques for trace CO and H₂ removal involve catalytic conversion of CO to CO₂ and H₂ to water with subsequent removal of CO₂ and water impurities.

In the conventional process for cryogenic separation of air to recover N₂ and O₂, feed air is compressed, then cooled to low temperature before introduction to a two stage distillation column. Unless water and CO₂ are removed from the air before compression, these components will block heat exchangers employed for cooling the gas prior to distillation. The principal method for such removal is thermal swing adsorption (TSA) on molecular sieve. In the TSA system for CO₂ and water removal, atmospheric air is compressed to about 100 psig (793 kPa) followed by water-cooling and removal of the thus condensed water. Then the air, which is then about 100°F (38°C), can be further cooled to 40°F (4.5°C) using refrigerated ethylene glycol. The bulk of the water is removed in this step by condensation and separation of the condensate. The gas is then passed to a molecular sieve bed or mixed alumina/molecular sieve bed system where the remaining water and CO₂ are removed by adsorption. The sorbent beds are operated in a thermal swing mode with equal periods, such as four hours (may be as long as 24 hours), being devoted to adsorption and to regeneration. By using two beds, one is operated for adsorption while the other is being regenerated and their roles are periodically reversed in the operating cycle. During the regeneration, part of the product gas (N₂) or waste stream from the cold box is slightly compressed with a blower and heated to about 260°C. The hot gas is passed through the bed being regenerated, perhaps for two hours, following which the regeneration gas is cooled to typically 4.5°C for the final two hours, so cooling the bed to that temperature. Regeneration is carried out in a direction counter to that of the adsorption step.

Alternatively, a PSA system may be used. In this case, cycle times are shorter (feed steps are 5-30 minutes), but feed temperature, pressure and regeneration gas remains the same. In the case of PSA, the regeneration gas is not heated.

Such a system is effective for the removal of CO₂, water and C₃₊ hydrocarbons from atmospheric air. However, conventional molecular sieve beds are not effective for the removal of CO or H₂. The main conventional technique currently used to produce CO-free N₂ includes oxidation of CO present in the ambient air to CO₂ prior to feeding to the molecular sieve system. This additional catalytic conversion systems adds to capital and operating costs of a standard N₂ plant. Alternatively, such CO removal steps may be applied to the nitrogen obtained after the air separation process.

In one known method CO is removed from nitrogen using a Ni on alumina catalyst. The principle disadvantages with this material are high cost, the need for activation in reducing gas and the pyrophoric nature of the activated material. Good adsorbents for trace CO removal should preferably be less expensive, easily regenerable and not pyrophoric.

The oxidation of CO to CO₂ and H₂ to H₂O in the presence of O₂ occurs readily at high temperatures (above 500°C). These reactions can be carried out at lower temperature, about 150°C, in the presence of noble metal catalysts based on palladium or platinum (Anderson, H. C. and Green, W. J., Ind. Eng. Chem., 53, 645, 1961). This technique is currently used as a pre-treatment step for ambient air prior to the front-end adsorption system for CO₂ and water removal on a cryogenic air plant. The main disadvantages of this removal technique include 1) high cost of noble metal catalysts, 2) the need to heat the air prior introduction to the catalyst bed, 3) an extra bed and increased plot space is required and 4) the added system pressure drop increases the power requirements of the system.

Ambient temperature processes for the removal of trace impurities from inert gases are also known in the art.

US Patent 4,713,224 teaches a one step process for purifying gases containing trace quantities of CO, CO₂, O₂, H₂ and H₂O in which the gas stream is passed over a material comprising elemental nickel and having a large surface area. If there is oxygen present, CO is oxidised to CO₂, otherwise it is adsorbed. The specification is rather vague as regards the nature of the substrate on which the nickel is supported, referring to it merely as a "silica-based substrate".

Processes for the ambient temperature oxidation of CO to CO₂ are given in US Patents 3,672,824 and 3,758,666.

US 5,110,569 teaches a process for removing trace quantities of carbon monoxide and hydrogen from an air stream along with larger quantities of carbon dioxide and water as a prelude to cryogenic distillation. The process is conducted by TSA or PSA using a three layer adsorption bed having a first layer for adsorbing water (suitably alumina, silica gel, zeolite or combinations thereof), a second layer of catalyst for converting carbon monoxide to carbon dioxide (suitably nickel oxide or a mixture of manganese and copper oxides) and a third layer for adsorbing carbon dioxide and water (suitably zeolite, activated alumina or silica gel). The second layer may include a catalyst for converting hydrogen to water and this may be supported palladium. Thus, US 5,110,569 teaches a process for removing CO, CO₂, H₂O and optionally H₂ from a feed stream (particularly air) comprising 1) initially removing water and carbon dioxide, 2) catalytic oxidation of CO to CO₂ and H₂ to H₂O and 3) removing the oxidation products. The resulting gas stream may then be purified by cryogenic distillation.

US 5,238,670 is similar in its disclosure but uses one of several metals including platinum and palladium supported on zeolite, alumina or silica as catalyst. There are numerous similar publications.

It is not disclosed that any catalyst is capable of both oxidising carbon monoxide to carbon dioxide and adsorbing the carbon dioxide produced without using an additional layer for adsorbing the oxidation products. Nor is it disclosed that supported palladium can be used to convert carbon monoxide to carbon dioxide. Equally, it is not disclosed that the supported palladium used for oxidising hydrogen is capable of adsorbing the water produced.

It is also not apparently the intention that the carbon dioxide present initially should be adsorbed prior to the oxidation of the carbon monoxide.

In FR 2739304, carbon monoxide is first oxidised to carbon dioxide and the carbon dioxide produced together with carbon dioxide and water present initially are then adsorbed using conventional adsorbents. Thereafter, hydrogen is adsorbed on palladium supported on alumina. Metals that can be used in place of palladium are Os, Ir, Rh, Ru, and Pt. It is stated that hydrogen is not oxidised under these conditions. This casts doubt on whether US 5,110,569 is correct in stating that hydrogen can be oxidised on supported palladium or other precious metals.

None of these prior art teachings recognise that the oxidation of carbon monoxide to carbon dioxide over a suitable catalyst can be assisted by the simultaneous adsorption of the carbon dioxide so produced, so that the concentration of carbon dioxide is kept low and well below the equilibrium concentration in the zone in which the oxidation reaction is being carried out.

### BRIEF SUMMARY OF THE INVENTION

We have now found that by providing a carbon dioxide adsorbent in the zone in which the oxidation is being carried out, the rate and completeness of the oxidation can be improved.

The present invention accordingly provides a process for the removal of carbon monoxide from a gas stream comprising oxidising the carbon monoxide to carbon dioxide and adsorbing the carbon dioxide produced, wherein the oxidation and adsorption is conducted by contacting the gas stream with a physical mixture of a solid oxidation catalyst material and a solid adsorbent for the carbon dioxide.

The catalyst is preferably a supported precious metal, e.g., Pd, Os, Ir, Rh, Ru, Ag, Au, Re or Pt, or a transition metal preferably supported on alumina, silica or zeolites. Most preferably, the catalyst is platinum and/or palladium supported on alumina. We have surprisingly established that supported platinum and/or palladium has a useful capacity for carbon dioxide adsorption and that it is capable of oxidising carbon monoxide and hydrogen in the presence of each other. Nonetheless, the adsorption capacity of the catalyst itself is usefully supplemented by the presence of the carbon dioxide adsorbent.

Suitably, the proportions of catalyst and adsorbent depend on many factors, such as the concentration of CO challenge and the operating temperature, as well as the CO₂ content in the feed. Under ambient temperatures, if CO₂ is removed in a pre-bed, the catalyst to adsorbent ratio can be in the range of from 0.5:1 to 2:1 on a volume basis. If CO₂ is not removed in a pre-bed, then the ratio should be much lower, i.e., in the range 0.05:1 to 0.2:1.

The gas stream to be purified may contain water which is removed by contacting the gas stream with a desiccant such as alumina or zeolite. The gas stream may also contain hydrogen which is removed by adsorption or by oxidation and adsorption of the water so produced. The oxidation of the hydrogen may be performed together with the oxidation of the carbon monoxide or separately.

Carbon dioxide present in the gas stream prior to purification may be removed by adsorption prior to carbon monoxide oxidation.

The adsorbent and catalyst system employed may comprise:
a)
   (1) a desiccant such as alumina to remove water, (2) a catalyst such as Pt/Al₂O₃ and/or Pd/Al₂O₃ or oxidising carbon monoxide to carbon dioxide mixed with an adsorbent for carbon dioxide such as 13X zeolite, and (3) a catalyst/adsorbent for oxidising hydrogen and adsorbing water, such as Pt/Al₂O₃ and/or Pd/Al₂O₃; or
b)
   (1) a desiccant such as alumina to remove water,
   (2) a catalyst such as Pt/Al₂O₃ and/or Pd/Al₂O₃ or oxidising carbon monoxide to carbon dioxide mixed with an adsorbent for carbon dioxide such as 13X zeolite and also serving for oxidising hydrogen to water and adsorbing the water so produced; or
c)
   (1) a desiccant such as alumina to remove water, (2) a carbon dioxide adsorbent to remove CO₂ present initially, and (3) a catalyst such as Pt/Al₂O₃ and/or Pd/Al₂O₃ for oxidising carbon monoxide to carbon dioxide mixed with an adsorbent for carbon dioxide such as 13x zeolite and also serving for oxidising hydrogen to water and adsorbing the water so produced.

As indicated above, the gas stream may be of air which is to be separated into oxygen and nitrogen to produce a stream of nitrogen free from carbon monoxide and optionally also from hydrogen down to ppb levels. This method of operation is referred to as the "pre-treatment mode". Alternatively, it may be a stream of nitrogen produced in an air separation unit and then subjected to purification. This is referred to as the "post-treatment mode".

The pre-treatment mode allows the air feed to the cryogenic column to be free of CO₂, H₂O, H₂ and CO. The distillation column is then capable of producing high purity N₂.

The starting level of CO will generally be only a trace amount (up to 25 ppm). The final levels of CO is preferably no more than 5 ppb, preferably below 3 ppb, most preferably no more than 1 ppb of CO.

Processes according to the invention may be operated by TSA or PSA or variants thereof. In TSA, adsorbent regeneration is accomplished by pressure reduction followed by counter-current purge with hot gas. In PSA, adsorbent regeneration is generally accomplished by pressure reduction followed by counter-current purge with ambient temperature gas.

Feed temperatures may be from 5 to 40°C with feed pressures of 2 to 15 atmospheres. For TSA systems, typical regeneration temperatures are 100 to 400°C. Regeneration gas can consist of N₂, O₂, Ar, He, air and mixtures thereof.

In a typical preferred embodiment, the feed to the system would be ambient air and the regeneration flow would consist of either product N₂ or more desirably waste effluent from the N₂ plant (60% O₂/40% N₂).

### BRIEF DESCRIPTION OF SEVERAL VIEWS OF THE DRAWINGS

The invention will be further illustrated by the following description of preferred embodiments with reference to the accompanying drawings, in which:

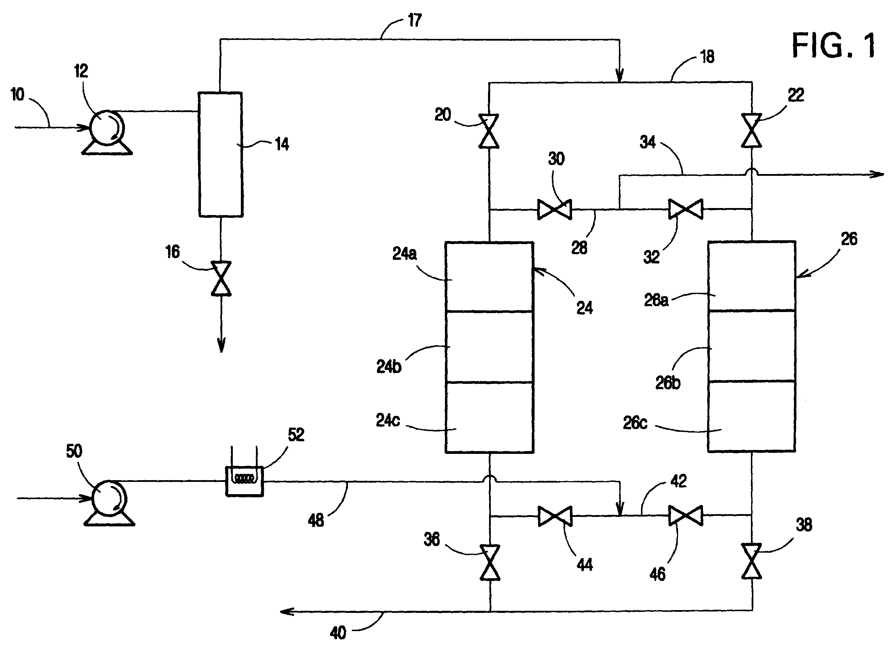

Figure 1 is a schematic diagram of apparatus for use according to a first embodiment of the invention.

### DETAILED DESCRIPTION OF THE INVENTION

As shown in Figure 1, apparatus for use according to the invention comprises an inlet 10 for a gas stream (which in this case is air) leading to a main air compressor 12. Compressed air produced by the main air compressor 12 passes to a cooler 14 in which some of the water present in the air is condensed out and exits via drain valve 16.

The cooled, partially dried air passes via a line 17 to a purification section of the apparatus which in the illustrated case operates by TSA. It should be appreciated however that this section of the apparatus can be designed to operated by PSA or any of the variants of TSA and PSA known in the art.

Air is received from line 17 into an inlet manifold 18 containing valves 20,22, which connect line 17 to respective adsorption vessels 24,26. Downstream of valves 20,22, the manifold comprises a bridge line 28 containing valves 30,32 by which the vessels 24,26 may respectively be connected to a vent-to-waste line 34.

The downstream ends of the vessels 24,26 are connected to an outlet manifold comprising valves 36,38 by which the respective vessels are connected to a product outlet line 40. Upstream of the valves 36,38, the manifold comprises a bridge line 42 containing valves 44,46 by which the respective vessels can be connected to a purge gas supply line 48, which leads from a supply of purge gas via a compressor 50 and a heater 52 to connect to bridge line 42 between valves 44 and 46. The supply of purge gas may suitably be from nitrogen separated from air purified in the apparatus shown and then subjected to cryogenic distillation or from air purified in the illustrated apparatus before it is subjected to such distillation.

Within each of the vessels 24 and 26 in Figure 1, there are three layers of adsorbent illustrated. The first two layers are conventional adsorbents for water 24a, 26a and carbon dioxide 24b, 26b. Suitably these are activated alumina and zeolite respectively. However, any suitable adsorbent or adsorbents for water and carbon dioxide removal may be used as known in the art and these two layers may be combined into a single layer of adsorbent.

The third layer 24c, 26c illustrated is oxidation catalyst, preferably palladium supported on alumina, mixed with an adsorbent for carbon dioxide, preferably 13X zeolite. The carbon monoxide and hydrogen initially present are both oxidised and adsorbed in this layer. All three layers of the adsorbents are periodically regenerated as described above.

The invention will be further described and illustrated with reference to the following specific example.

### Example 1

A laboratory reactor of 1.37" (3.48 cm) inside diameter was charged with a commercial 0.5% Pd/Al₂O₃ oxidation catalyst to result in a packed bed height of 9" (23 cm). The bed was challenged with air free of CO₂ and H₂O at a flow of 3.47 scfm (5.89 m³/h) and the air was spiked with 2.6 ppm H₂ and 1.9 ppm CO. At an ambient temperature of 22°C, both CO and H₂ were effectively removed to below a level of 20 parts-per-billion (ppb). After 0.93 hours on stream, CO₂ (an oxidation product of CO) broke through the bed at the 6" (15 cm) point, and after 1.43 hours H₂ started to show at the 6" (15 cm) point. CO₂ and H₂ started to elute at the end of the bed (9" (23 cm) point) after 1.85 hours and 2.61 hours, respectively.

The same reactor described in the preceding paragraph was charged with a well-mixed mixture of equal volumes of the commercial 0.5% Pd/Al₂O₃ catalyst and a commercial molecular sieve 13X to result in a packed bed height of 12" (30 cm). The bed was challenged with an air flow of 3.46 scfm (5.87 m³\h) and the air was spiked with 2.6 ppm H₂ and 1.8 ppm CO. The feed air was free of CO₂ and H₂O. At an ambient temperature of 20.6°C, both CO and H₂ were removed to below 20 ppb. After more than 1.5 hours, H₂ concentration in the effluent increased to be higher than 20 ppb and no other impurity, i.e., CO, CO₂, or H₂O, was observed in the effluent.

## Claims

1. A process for the removal of carbon monoxide from a gas stream comprising oxidising the carbon monoxide to carbon dioxide and adsorbing the carbon dioxide produced, wherein the oxidation and adsorption is conducted by contacting the gas stream with a physical mixture of a solid oxidation catalyst material and a solid adsorbent for the carbon dioxide.

2. A process as claimed in Claim 1, wherein said removal is conducted using a mixture of a catalyst, transition metal catalysts and mixtures thereof selected from the group consisting of supported precious metal catalysts and an adsorbent selected from the group consisting of zeolites and activated alumina.

3. A process as claimed in Claim 1, wherein hydrogen is also present in said gas stream and is removed by oxidation to water over said catalyst and adsorption on said catalyst and/or said solid adsorbent.

4. A process for the removal of carbon dioxide, water, carbon monoxide and hydrogen from a gas stream to produce a purified gas stream, comprising:
adsorbing water and carbon dioxide on a solid adsorbent, and converting carbon monoxide to carbon dioxide over a solid catalyst in physical admixture with a solid adsorbent for carbon dioxide and adsorbing the carbon dioxide so formed on to the mixture of said catalyst and solid adsorbent.

5. A process as claimed in Claim 4, wherein said hydrogen is also oxidised to water over said catalyst and the water is adsorbed on said mixture of said catalyst and said solid adsorbent.

6. A process as claimed in Claim 4, wherein said hydrogen is oxidised in a separate body of a solid catalyst and is adsorbed thereon as water.

7. A process as claimed in Claim 4, wherein said catalyst for carbon dioxide oxidation is a supported precious metal catalyst.

8. A process as claimed in Claim 7, wherein said catalyst for carbon monoxide oxidation is palladium supported on alumina.

9. A process as claimed in Claim 7, wherein said catalyst for carbon monoxide oxidation is platinum supported on alumina.

10. A process as claimed in Claim 6, wherein said catalyst for hydrogen oxidation is selected from the group consisting of platinum, palladium and mixtures thereof, supported on a catalyst support.

11. A process as claimed in Claim 3, wherein the carbon monoxide content of the purified gas stream is no more than 5 ppb.

12. A process as claimed in Claim 11, wherein said carbon monoxide content is no more than 3 ppb.

13. A process as claimed in Claim 3, wherein the hydrogen content of the purified gas stream is no more than 5 ppb.

14. A process as claimed in Claim 13, wherein said hydrogen content is no more than 3 ppb.
